# EUROPEAN PATENT APPLICATION

(11) **EP 4 254 338 A1**
(43) Date of publication of application: **04.10.2023**
(21) Application number: 20967001.7
(22) Date of filing: 25.12.2020
(51) Int. Cl.: G06T 9/40

(54) **DECODING METHOD, DECODING DEVICE, DECODING PROGRAM, AND DATA STRUCTURE OF CODED POINT GROUP DATA**

(71) Applicant: Nippon Telegraph and Telephone Corporation, Tokyo 100-8116 (JP)
(72) Inventor: SUGIMOTO, Shiori, Musashino-shi, Tokyo 180-8585 (JP); WATANABE, Mayuko, Musashino-shi, Tokyo 180-8585 (JP); TANIDA, Ryuichi, Musashino-shi, Tokyo 180-8585 (JP); KIMATA, Hideaki, Musashino-shi, Tokyo 180-8585 (JP)
(74) Representative: Brevalex
(86) International application number: PCT/JP2020/048778
(87) International publication number: WO 2022/137515

(57) **Abstract**

A reference specifying unit specifies reference values corresponding to a plurality of points of point cloud data. A residual decoding unit decodes attribute residuals of the plurality of points from encoded residual data obtained by encoding the attribute residuals, the attribute residuals of the plurality of points being residuals of attribute values of the plurality of points with respect to the reference values. An attribute value calculation unit calculates, for each of the plurality of points, an attribute value of the point from an attribute residual and a reference value.

## Description

### Technical Field

The present invention relates to a decoding method, a decoding device (a decoding apparatus), a decoding program, and a data structure of encoded point cloud data.

### Background Art

As a method for encoding a moving image represented by point cloud data, combine frame coding has been proposed (see Non Patent Literature 1). The combine frame coding is a technique of merging point clouds belonging to a plurality of frames and then performing encoding. An octree is known as an encoding method of point cloud data. Point clouds represented in consecutive frames in a moving image have a high correlation with each other in terms of their positions, and thus have similar structures at an upper level (a level close to the root) of the octree. Therefore, using the combine frame coding makes it possible to enhance the encoding efficiency. Note that, a frame index is assigned to each of the plurality of merged points, so that a point cloud can be extracted for each frame at the time of decoding.

### Citation List

### Non Patent Literature

Non Patent Literature 1: N19525, ISO/IEC JTC 1/SC 29/WG 11 "Coding of moving pictures and audio", October 2, 2020

### Summary of Invention

### Technical Problem

Meanwhile, attributes other than positions (geometry) of points do not necessarily have a high correlation between frames. Therefore, in the case of using the combine frame coding, there is a possibility that, although the encoding efficiency can be enhanced at least for the positions of the points, the encoding efficiency cannot be enhanced for other attributes.

An object of the present invention is to provide a decoding method, a decoding device, a decoding program, and a data structure of encoded point cloud data capable of decoding point clouds from data in which the encoding efficiency is enhanced for attributes of the point clouds.

### Solution to Problem

One aspect of the present invention is a decoding method for decoding point cloud data, the decoding method including: a step of specifying reference values corresponding to a plurality of points; a step of decoding attribute residuals of the plurality of points from encoded residual data obtained by encoding the attribute residuals, the attribute residuals of the plurality of points being residuals of attribute values of the plurality of points with respect to the reference values; and a step of calculating, for each of the plurality of points, an attribute value of the point from an attribute residual of the point and a reference value corresponding to the point.

One aspect of the present invention is a decoding method including: a step of decoding a frame index and an attribute residual of each of a plurality of points included in merged point cloud data obtained by merging point clouds belonging to different frames from encoded attribute data obtained by encoding attribute data including frame indexes indicating the frames to which the points belong and attribute residuals that are residuals of attribute values with respect to reference values; a step of acquiring reference data indicating a correspondence relationship between the frame indexes and the reference values; a step of specifying, for each of the plurality of points, a reference value corresponding to the decoded frame index from the reference data; and a step of calculating, for each of the plurality of points, an attribute value from the decoded attribute residual and the specified reference value.

One aspect of the present invention is a decoding device that decodes point cloud data, the decoding device including: a reference specifying unit that specifies reference values corresponding to a plurality of points; a residual decoding unit that decodes attribute residuals of the plurality of points from encoded residual data obtained by encoding the attribute residuals, the attribute residuals of the plurality of points being residuals of attribute values of the plurality of points with respect to the reference values; and an attribute value calculation unit 56 that calculates, for each of the plurality of points, an attribute value of the point from an attribute residual of the point and a reference value corresponding to the point.

One aspect of the present invention is a decoding program for causing a computer to execute: a step of specifying reference values corresponding to a plurality of points from reference data indicating a correspondence relationship between the plurality of points and the reference values; a step of decoding attribute residuals of the plurality of points from encoded residual data obtained by encoding the attribute residuals, the attribute residuals of the plurality of points being residuals of attribute values of the plurality of points with respect to the reference values; and a step of calculating, for each of the plurality of points, an attribute value of the point from an attribute residual of the point and a reference value corresponding to the point.

One aspect of the present invention is a data structure of encoded point cloud data including: encoded residual data obtained by encoding attribute residuals that are residuals of attribute values of a plurality of points with respect to reference values, the encoded residual data being used by a computer for processing of decoding the attribute residuals; and reference data indicating a correspondence relationship between the plurality of points and the reference values, the reference data being used by the computer for processing of calculating, for each of the plurality of points, an attribute value from an attribute residual and a reference value.

### Advantageous Effects of Invention

According to the above aspects, point clouds can be decoded from data in which the encoding efficiency is enhanced for attributes of the point clouds.

### Brief Description of Drawings

Fig. 1 is a schematic diagram illustrating a configuration of a moving image processing system according to a first embodiment.
Fig. 2 is a schematic block diagram illustrating a configuration of an encoding device according to the first embodiment.
Fig. 3 is a diagram illustrating an example of a data structure of encoded point cloud data according to the first embodiment.
Fig. 4 is a flowchart illustrating a method of encoding dynamic point cloud data by the encoding device according to the first embodiment.
Fig. 5 is a schematic block diagram illustrating a configuration of a decoding device according to the first embodiment.
Fig. 6 is a flowchart illustrating a method of decoding encoded point cloud data by the decoding device according to the first embodiment.
Fig. 7 is a schematic block diagram illustrating a configuration of a computer according to at least one embodiment.

### Description of Embodiments

### <First embodiment>

### <<Configuration of moving image processing system 1>>

Hereinafter, an embodiment will be described in detail with reference to the drawings.

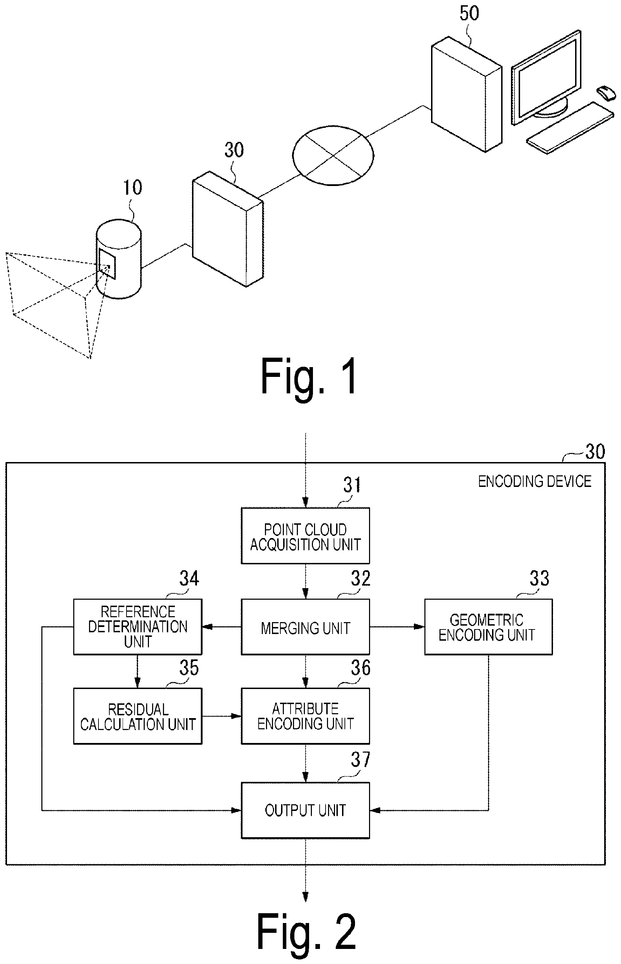

Fig. 1 is a schematic diagram illustrating a configuration of a moving image processing system according to a first embodiment. A moving image processing system 1 includes a point cloud generation device 10, an encoding device 30, and a decoding device 50.

The point cloud generation device 10 generates point cloud data representing a three-dimensional shape of an object existing in a target space. The point cloud generation device 10 generates the point cloud data for each predetermined frame time to generate dynamic point cloud data. Examples of the point cloud generation device 10 include a light detection and ranging (LiDAR) device. The point cloud generation device 10 specifies a global position of each measured point using a global position specified by a global navigation satellite system (GNSS) and a posture specified by an inertial sensor. The point cloud data includes data indicating the specified positions (geometry data) and attribute data such as color, measurement time, and measurement values of various measuring instruments.

The encoding device 30 generates encoded point cloud data obtained by encoding the dynamic point cloud data generated by the point cloud generation device 10. In the dynamic point cloud data, point clouds represented in consecutive frames have a high correlation with each other in terms of their positions. On the other hand, attributes other than positions of points do not necessarily have a high correlation between points at close positions between frames. Depending on the attribute, points at different positions in the same frame, points at different positions in different frames, or the like may have close values or values having a high correlation. For example, the measurement time exemplified above is likely to have closer values between points at different positions in the same frame than between points at close positions in different frames. Furthermore, in a case where the point cloud generation device 10 periodically acquires points at the same position in the real space, there is a possibility that points at adjacent positions in different frames or points at different positions in different frames have close values. The encoding device 30 according to the first embodiment uses this property to increase the encoding efficiency of the dynamic point cloud data.

The decoding device 50 decodes the encoded point cloud data and reproduces the dynamic point cloud data. The encoding device 30 outputs the encoded point cloud data to the decoding device 50 via, for example, a network.

### <<Configuration of encoding device 30>>

Fig. 2 is a schematic block diagram illustrating a configuration of the encoding device 30 according to the first embodiment. The encoding device 30 includes a point cloud acquisition unit 31, a merging unit 32, a geometric encoding unit 33, a reference determination unit 34, a residual calculation unit 35, an attribute encoding unit 36, and an output unit 37.

The point cloud acquisition unit 31 acquires dynamic point cloud data from the point cloud generation device 10. The merging unit 32 merges a plurality of frames constituting the dynamic point cloud data. The geometric encoding unit 33 encodes the positions of a plurality of points included in the merged dynamic point cloud data to generate encoded geometric data. An example of an encoding method of the point cloud data includes octree encoding.

The reference determination unit 34 determines a reference value related to an attribute item for which attribute residuals are to be encoded among a plurality of attribute items of the merged dynamic point cloud data. The attribute item for which the attribute residuals are to be encoded is determined in advance. At least a frame index is not included in the attribute item for which the attribute residuals are to be encoded. The encoding efficiency can be enhanced if an attribute item whose value changes with time, such as a distance from a laser irradiation point or a light receiving angle, is selected as the attribute item for which the attribute residuals are to be encoded.

Examples of the attribute item for which the attribute residuals are to be encoded include, for example, thermographic data, a three-dimensional position and posture of the point cloud generation device 10 at the time of scanning, a segmentation label, a parameter of particle simulation (for example, a velocity vector), a normal line, reflection intensity of a laser, transparency, a material ID, and the like. The value of the thermographic data changes with time under the influence of the outside air temperature. The three-dimensional position and posture of the point cloud generation device 10 change with time in a case where the point cloud generation device 10 is provided in a moving body such as a vehicle. The segmentation label is a label indicating a category to which a point belongs, which is attached by, for example, semantic segmentation or the like. In a case where semantic segmentation is performed for each frame, an attached segmentation label may change between frames.

The reference determination unit 34 determines the reference value such that the deviation of attribute values between frames decreases. The reference determination unit 34 calculates, for example, an average value of attribute values for each frame as a reference value. The reference determination unit 34 generates reference data in which a frame index indicating a frame, an attribute item, and a reference value are associated with each other. The reference determination unit 34 may encode the reference data.

The residual calculation unit 35 calculates, for each of the plurality of points included in the merged dynamic point cloud data, an attribute residual that is a residual between an attribute value of the attribute item for which the reference value has been determined and the reference value. The attribute encoding unit 36 encodes attribute residuals of the plurality of points included in the merged dynamic point cloud data to generate encoded residual data. The attribute encoding unit 36 encodes attribute values related to an attribute item for which attribute residuals of the plurality of points included in the merged dynamic point cloud data are not encoded to generate encoded attribute data. The attribute encoding unit 36 transforms and encodes the attribute residual of each point. Meanwhile, the attribute encoding unit 36 losslessly encodes the frame index of each point. The encoded attribute data related to the frame index is also referred to as encoded index data.

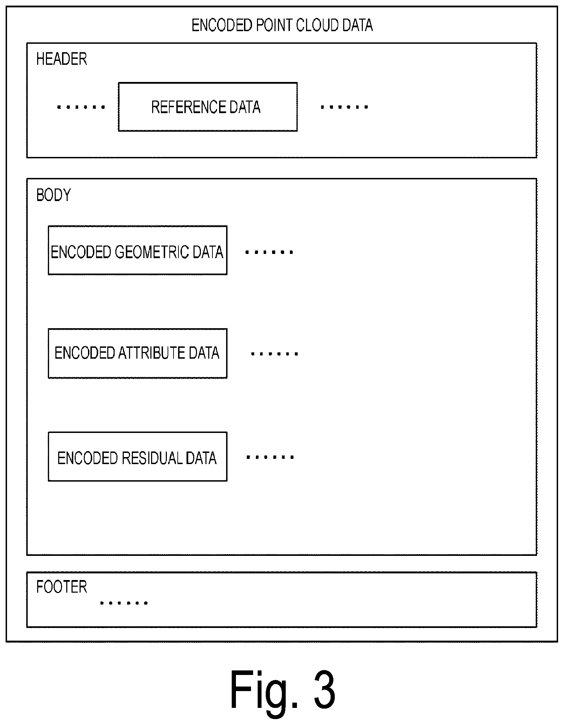

The output unit 37 outputs encoded point cloud data including the encoded geometric data, the encoded attribute data, the encoded residual data, and the reference data to the decoding device 50. Fig. 3 is a diagram illustrating an example of a data structure of the encoded point cloud data according to the first embodiment. In the example illustrated in Fig. 3, the encoded point cloud data includes the reference data in a header, and includes the encoded geometric data, the encoded attribute data, and the encoded residual data in a body. Each of the encoded geometric data, the encoded attribute data, and the encoded residual data may be stored by being divided into a plurality of slices. Note that, in another embodiment, the reference data may be output as an additional message.

### <<Operation of encoding device 30>>

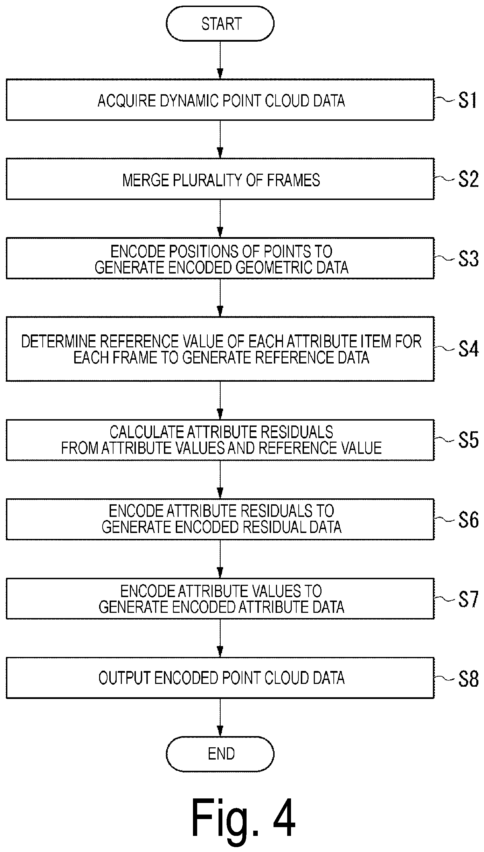

Fig. 4 is a flowchart illustrating a method of encoding dynamic point cloud data by the encoding device 30 according to the first embodiment. The point cloud acquisition unit 31 of the encoding device 30 acquires dynamic point cloud data from the point cloud generation device 10 (step S1). The dynamic point cloud data acquired by the point cloud acquisition unit 31 may be data constituting a part of dynamic point cloud data having a large number of frames.

The merging unit 32 merges a plurality of frames constituting the dynamic point cloud data acquired in step S1 (step S2). The geometric encoding unit 33 generates encoded geometric data for the positions of a plurality of points included in the merged dynamic point cloud data (step S3).

The reference determination unit 34 determines a reference value for each frame for an attribute item for which attribute residuals are to be encoded to generate reference data (step S4). The residual calculation unit 35 calculates the attribute residuals from attribute values of the attribute item for which the attribute residuals are to be encoded on the basis of the reference value determined in step S4 (step S5). The attribute encoding unit 36 encodes the attribute residuals calculated in step S5 to generate encoded residual data (step S6). Furthermore, the attribute encoding unit 36 encodes attribute values of an attribute item for which attribute residuals are not calculated to generate encoded attribute data (step S7). The attribute item for which the attribute residuals are not calculated includes a frame index.

The output unit 37 outputs encoded point cloud data including the encoded geometric data, the encoded attribute data, the encoded residual data, and the reference data to the decoding device 50 (step S8).

As described above, the value of an attribute item whose value changes with time, such as a distance from a laser irradiation point or a light receiving angle, greatly changes between frames. Meanwhile, since an object represented by points does not change between frames, the relative relationship between the points in a frame for the attribute item does not change greatly between frames. Therefore, the encoding device 30 can generate encoded point cloud data with high encoding efficiency by encoding residuals between a reference value for each frame and attribute values.

### <<Configuration of decoding device 50>>

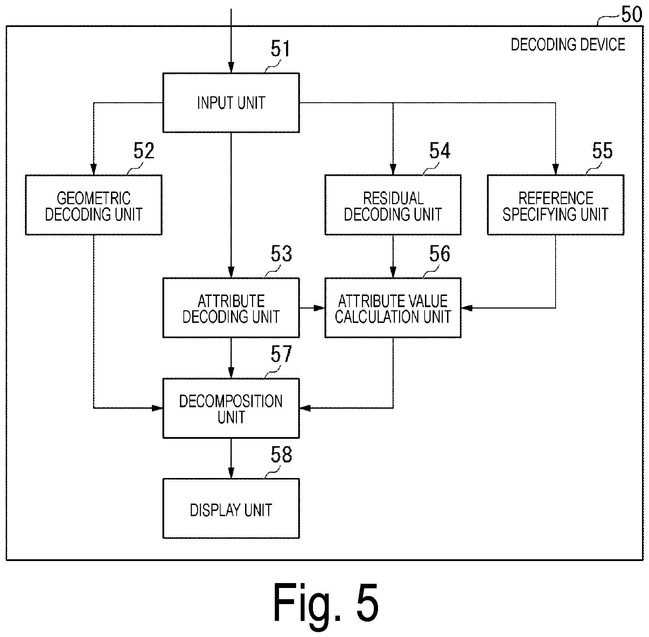

Fig. 5 is a schematic block diagram illustrating a configuration of the decoding device 50 according to the first embodiment. The decoding device 50 includes an input unit 51, a geometric decoding unit 52, an attribute decoding unit 53, a residual decoding unit 54, a reference specifying unit 55, an attribute value calculation unit 56, a decomposition unit 57, and a display unit 58.

The input unit 51 receives an input of encoded point cloud data from the decoding device 50. The geometric decoding unit 52 decodes encoded geometric data included in the encoded point cloud data. The attribute decoding unit 53 decodes encoded attribute data included in the encoded point cloud data. As a result, the attribute decoding unit 53 acquires an attribute value of each point, which includes a frame index.

The residual decoding unit 54 decodes encoded residual data included in the encoded point cloud data. As a result, the residual decoding unit 54 acquires an attribute residual of each point. The reference specifying unit 55 specifies a reference value for each frame index from reference data included in the encoded point cloud data. The attribute value calculation unit 56 adds the reference value to the attribute residual of each point to calculate an attribute of each point. The decomposition unit 57 decomposes the plurality of points into frames to reproduce dynamic point cloud data. The display unit 58 causes a display device to display a moving image on the basis of the dynamic point cloud data.

### <<Operation of decoding device 50>>

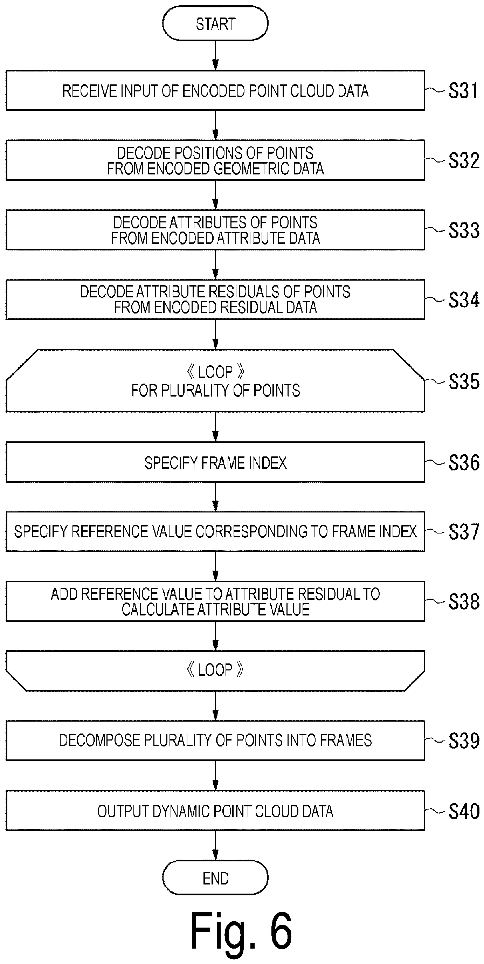

Fig. 6 is a flowchart illustrating a method of decoding encoded point cloud data by the decoding device 50 according to the first embodiment. The input unit 51 receives an input of encoded point cloud data from the decoding device 50 (step S31). The geometric decoding unit 52 decodes encoded geometric data included in the encoded point cloud data input in step S31 (step S32). As a result, the geometric decoding unit 52 specifies the positions of a plurality of points.

The attribute decoding unit 53 decodes encoded attribute data included in the encoded point cloud data input in step S31 (step S33). As a result, the attribute decoding unit 53 acquires an attribute value of each point, which includes a frame index. The residual decoding unit 54 decodes encoded residual data included in the encoded point cloud data (step S34). As a result, the residual decoding unit 54 acquires an attribute residual of each point.

The decoding device 50 selects points represented by the encoded point clouds one by one (step S35), and executes processing of the following steps S36 to S38 on the selected point. The reference specifying unit 55 specifies a frame index of the point specified in step S35 from the attribute values of the plurality of points acquired in step S33 (step S36). The reference specifying unit 55 specifies a reference value corresponding to the frame index specified in step S36 from reference data included in the encoded point cloud data input in step S31 (step S37). The attribute value calculation unit 56 adds the reference value specified in step S37 to an attribute residual of the point specified in step S35 to calculate an attribute value (step S38).

When the decoding device 50 calculates the attribute values of all the points, the decomposition unit 57 decomposes the plurality of points into frames to reproduce dynamic point cloud data (step S39). The display unit 58 causes the display device to display a moving image on the basis of the dynamic point cloud data (step S40). That is, the display unit 58 outputs the reproduced dynamic point cloud data to the display device.

As described above, the decoding device 50 according to the first embodiment specifies a reference value corresponding to each of a plurality of points from reference data, and calculates an attribute value of each of the plurality of points from an attribute residual of each of the plurality of points decoded from encoded residual data and the reference value. As a result, the decoding device 50 can decode encoded geometric data in which the encoding efficiency is enhanced for attributes of point clouds to obtain dynamic point cloud data.

### <Other embodiments>

Although the embodiment has been described in detail with reference to the drawings, specific configurations are not limited to the above-described configurations, and various design changes and the like can be made. That is, in another embodiment, the order of the above-described processing may be changed as appropriate. Furthermore, some of the processing may be executed in parallel.

Each of the encoding device 30 and the decoding device 50 according to the above-described embodiment may be configured by an independent computer, or the configuration of the encoding device 30 or the decoding device 50 may be disposed to be divided into a plurality of computers, and the plurality of computers may function as the encoding device 30 or the decoding device 50 in cooperation with each other. Furthermore, in another embodiment, the encoding device 30 and the decoding device 50 may be configured by the same computer.

The encoded point cloud data according to the above-described embodiment includes the reference data indicating the relationship between a frame index and a reference value, but is not limited thereto. For example, encoded point cloud data according to another embodiment may have a reference value for a group different from the frame. For example, in another embodiment, data obtained by merging point cloud data generated by different point cloud generation devices 10 may have reference values corresponding to the point cloud generation devices 10.

In addition, for example, GPS time among the attributes of the points may be reset during laser scanning by LiDAR, and may not have a correlation in a unit of a frame. For example, reference data of encoded point cloud data according to another embodiment may represent a lookup table in which a group index and a reference value are associated with each other. In this case, an attribute residual represented by encoded residual data represents a residual between a reference value corresponding to a group and an attribute value. Furthermore, encoded attribute data represents an attribute value including a group index in addition to a frame index. As a result, values in a frame can have different reference values.

In the case of the above-described modification, point cloud data to be encoded does not necessarily have to be dynamic point cloud data.

Furthermore, encoded point cloud data according to another embodiment may include a pointer indicating a reference destination point instead of a frame index, and may indicate that the same reference value as that of the point indicated by the pointer is used.

The point cloud generation device 10 according to the above-described embodiment is a LiDAR, but is not limited thereto in another embodiment. For example, a point cloud generation device 10 according to another embodiment may be another device such as a stereo camera device.

### <Computer configuration>

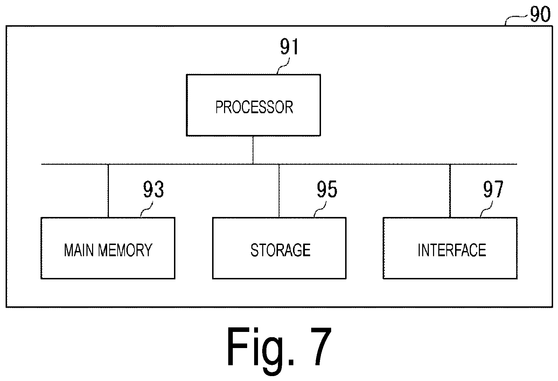

Fig. 7 is a schematic block diagram illustrating a configuration of a computer according to at least one embodiment.

A computer 90 includes a processor 91, a main memory 93, a storage 95, and an interface 97.

The encoding device 30 and the decoding device 50 described above are implemented by the computer 90. The operation of each processing unit described above is stored in the storage 95 in the form of a program. The processor 91 reads the program from the storage 95, develops the program in the main memory 93, and executes the above processing according to the program. In addition, the processor 91 secures a storage area corresponding to each of the above-described storage units in the main memory 93 according to the program. Examples of the processor 91 include a central processing unit (CPU), a graphic processing unit (GPU), and a microprocessor.

The program may be for implementing a part of the functions to be exerted by the computer 90. For example, the program may exhibit the functions by a combination with another program already stored in the storage or a combination with another program mounted on another device. Note that, in another embodiment, the computer 90 may include a custom large scale integrated circuit (LSI) such as a programmable logic device (PLD) in addition to or instead of the above configuration. Examples of the PLD include a programmable array logic (PAL), a generic array logic (GAL), a complex programmable logic device (CPLD), and a field programmable gate array (FPGA). In this case, some or all of the functions implemented by the processor 91 may be implemented by the integrated circuit. Such an integrated circuit is also included in examples of the processor.

Examples of the storage 95 include a magnetic disk, a magneto-optical disk, an optical disk, a semiconductor memory, and the like. The storage 95 may be an internal medium directly connected to a bus of the computer 90 or an external medium connected to the computer 90 via the interface 97 or a communication line. Furthermore, in a case where this program is distributed to the computer 90 via a communication line, the computer 90 that has received the distribution may develop the program in the main memory 93 and execute the above processing. In at least one embodiment, the storage 95 is a non-transitory tangible storage medium.

In addition, the program may be for implementing a part of the functions described above. Furthermore, the program may be a program that implements the above-described functions in combination with another program already stored in the storage 95, that is, a so-called difference file (difference program).

### Reference Signs List

- 1: Moving image processing system
- 10: Point cloud generation device
- 30: Encoding device
- 31: Point cloud acquisition unit
- 32: Merging unit
- 33: Geometric encoding unit
- 34: Reference determination unit
- 35: Residual calculation unit
- 36: Attribute encoding unit
- 37: Output unit
- 50: Decoding device
- 51: Input unit
- 52: Geometric decoding unit
- 53: Attribute decoding unit
- 54: Residual decoding unit
- 55: Reference specifying unit
- 56: Attribute value calculation unit
- 57: Decomposition unit
- 58: Display unit
- 90: Computer
- 91: Processor
- 93: Main memory
- 95: Storage
- 97: Interface

## Claims

1. A decoding method for decoding point cloud data, the decoding method comprising:
a step of specifying reference values corresponding to a plurality of points;
a step of decoding attribute residuals of the plurality of points from encoded residual data obtained by encoding the attribute residuals, the attribute residuals of the plurality of points being residuals of attribute values of the plurality of points with respect to the reference values; and
a step of calculating, for each of the plurality of points, an attribute value of the point from an attribute residual of the point and a reference value corresponding to the point.

2. The decoding method according to claim 1, wherein
the plurality of points include points belonging to different groups, and
in the step of specifying the reference values, a reference value corresponding to a group to which each of the plurality of points belongs is specified.

3. The decoding method according to claim 2, wherein
the groups are frames.

4. The decoding method according to claim 2 or 3, comprising
a step of decoding the group to which each of the plurality of points belongs from encoded attribute data obtained by encoding a value indicating the group to which each of the plurality of points belongs, wherein
in the step of specifying the reference values, a reference value corresponding to the decoded group to which each of the plurality of points belongs is specified.

5. A decoding method comprising:
a step of decoding a frame index and an attribute residual of each of a plurality of points included in merged point cloud data obtained by merging point clouds belonging to different frames from encoded index data obtained by encoding frame indexes indicating the frames to which the points belong and encoded residual data obtained by encoding attribute residuals that are residuals of attribute values with respect to reference values;
a step of acquiring reference data indicating a correspondence relationship between the frame indexes and the reference values;
a step of specifying, for each of the plurality of points, a reference value corresponding to the decoded frame index from the reference data; and
a step of calculating, for each of the plurality of points, an attribute value from the decoded attribute residual and the specified reference value.

6. A decoding device for decoding point cloud data, the decoding device comprising:
a reference specifying unit configured to specify reference values corresponding to a plurality of points;
a residual decoding unit configured to decode attribute residuals of the plurality of points from encoded residual data obtained by encoding the attribute residuals, the attribute residuals of the plurality of points being residuals of attribute values of the plurality of points with respect to the reference values; and
an attribute value calculation unit configured to calculate, for each of the plurality of points, an attribute value of the point from an attribute residual of the point and a reference value corresponding to the point.

7. A decoding program for causing a computer to execute:
a step of specifying reference values corresponding to a plurality of points from reference data indicating a correspondence relationship between the plurality of points and the reference values;
a step of decoding attribute residuals of the plurality of points from encoded residual data obtained by encoding the attribute residuals, the attribute residuals of the plurality of points being residuals of attribute values of the plurality of points with respect to the reference values; and
a step of calculating, for each of the plurality of points, an attribute value of the point from an attribute residual of the point and a reference value corresponding to the point.

8. A data structure of encoded point cloud data comprising:
encoded residual data obtained by encoding attribute residuals that are residuals of attribute values of a plurality of points with respect to reference values, the encoded residual data being used by a computer for processing of decoding the attribute residuals; and
reference data indicating a correspondence relationship between the plurality of points and the reference values, the reference data being used by the computer for processing of calculating, for each of the plurality of points, an attribute value from an attribute residual and a reference value.
